# EUROPEAN PATENT SPECIFICATION

(11) **EP 3 663 078 B1**
(45) Date of publication and mention of the grant of the patent: **27.01.2021**
(21) Application number: 19211436.1
(22) Date of filing: 26.11.2019
(51) Int. Cl.: B29D 30/54, B29C 73/30

(54) **MOBILE TYRE RETREADING PLANT**
MOBILE REIFENRUNDERNEUERUNGSANLAGE
INSTALLATION MOBILE DE RECHAPAGE DE PNEUMATIQUES

(30) Priority: 29.11.2018 IT 201800010694
(43) Date of publication of application: 10.06.2020
(73) Proprietor: Bridgestone Europe NV/SA, 1932 Zaventem (BE)
(72) Inventor: LELIO, Luca, 00128 Roma (IT); BRAM, Vincent, 1932 Zaventem (BE)
(74) Representative: Marchetti, Alessio

(56) References cited:
- BR-A2- PI0 901 191
- US-A- 3 033 521
- DATABASE COMPENDEX [Online] ENGINEERING INFORMATION, INC., NEW YORK, NY, US; 1977, PENALUNA KENNETH D ET AL: "ECONOMIC AND MOBILITY CONSIDERATIONS IN TRUCK TIRE AND RETREAD SELECTION.", XP002793380, Database accession no. EIX77110001586 & PENALUNA KENNETH D ET AL: "ECONOMIC AND MOBILITY CONSIDERATIONS IN TRUCK TIRE AND RETREAD SELECTION.", 1977 SAE (P-70), 10 November 1976 (1976-11-10),

## Description

### TECHNICAL FIELD

The present invention relates to a mobile tyre retreading plant.

The present invention may be used to advantage for retreading truck tyres, to which the following description refers purely by way of example.

### BACKGROUND ART

Traditionally, after first use "truck" tyres are retreaded, i.e., they are provided with a new tread in place of the old worn tread which is removed beforehand. The retreading of a "truck" tyre provides to eliminate the old worn tread mechanically from the used tyre in order to expose the "casing", and subsequently applying a new tread to the casing. The application of a new tread to the casing provides winding about the same casing a "tread strip"; the casing is then subjected to a curing process in order to determine the optimum adhesion of the tread to the casing. In the hot retreading process, the tread strip is green and without a pattern which is implemented during the curing step in a curing press provided with a mold having the required pattern.

In the hot retreading process, the curing takes place at high temperatures (around 150°C to 160°C) and high pressures (in the order of about 1.4-1.6 MPa) which are needed to make the rubber fluid enough to flow into the mold in order to form the pattern during curing; the thermal and mechanical stresses to which the casing is subjected due to such high temperatures and pressures can however cause damage to the same casing.

In the cold retreading process, the tread strip (called *"PCT Pre Cured Tread* - *strip*") is pre-cured and already provided with the pattern, and between the casing and the pre-cured tread strip an intermediate strip or *"cushion",* having a bonding function, is interposed. In the cold retreading process, the curing is only meant to cure the intermediate strip in order to determine the optimal adhesion of the tread strip to the casing by means of the bonding action of the cushion (i.e., a pattern is not printed during curing); as a result, in the cold retreading process, curing takes place at lower temperatures (in the order of 100°C - 125°C), at lower pressures (in the order of 0.4-0.6 MPa), the casing is therefore subjected to lower thermal and mechanical stresses.

Generally, the hot retreading process provides for an average curing period for each *"truck"* tyre of about 1 hour at around 150°C - 160°C, while the cold retreading process provides for an average curing period for each *"truck"* tyre of about 4 hours at around 100°C - 125°C.

In the cold retreading process and to ensure adequate adhesion of the tread strip to the casing (with the interposition of the intermediate green rubber strip), it is necessary during curing to apply a radial pressure that compresses the tread strip against the casing. In known retreading plants, such a radial pressure is obtained by inserting the tyre in an autoclave within which an overpressure (in the order of 0.6 MPa), in relation to atmospheric pressure, is implemented and by inserting the tyre into a flexible *"envelope"* within which a vacuum is initially created and which is subsequently inflated with air to a pressure of about 0.45 Mpa); the difference in pressure (normally called *"DPC"),* which is maintained during the curing cycle, results in the generation of a pneumatic pressure that compresses the tread strip against the casing.

The use of the autoclave and the envelope, wherein the *"DPC"* pressure differential is applied, the vacuum makes it possible to apply a uniform pressure to the entire tread strip both at the peaks of the blocks of the pattern and at the valleys of the pattern; the uniformity of the pneumatic pressure (which would never be mechanically feasible insofar as the valleys of the pattern cannot be reached due to the size, shape and number thereof) makes it possible to ensure optimal tread adhesion to the casing.

However, the use of the autoclave and the envelope has several drawbacks: firstly, in use, the autoclave exhibits an internal pressure that is considerably greater than atmospheric pressure and that therefore poses various problems as regards the safety of the operators of the plant; furthermore, applying the envelope to the tyre is quite long and laborious, the envelope has a rather short working life (i.e., it must be replaced quite often), and the possible failure of the envelope during curing (a frequent situation) forces the recommencement of the retreading process or, in some cases, even the scrapping of the tyre.

Patent document BR PIO 901 191 A2 discloses a mobile tyre calibration, geometry and balancing device mounted inside a vehicle.

### DESCRIPTION OF THE INVENTION

It is an object of the present invention to provide a mobile tyre retreading plant that allows to increase productivity while reducing the overall cost of the retreading process.

According to the present invention, there is provided a cold tyre retreading plant, as claimed in the accompanying Claims.

The claims describe preferred embodiments of the present invention forming an integral part of the present disclosure.

### BRIEF DESCRIPTION OF THE DRAWINGS

A non-limiting embodiment of the present invention will be described by way of example with reference to the accompanying drawings, in which:
Figure 1 is a schematic view of a truck which transports a mobile tyre retreading plant made according to the present invention;
Figure 2 is a schematic plan view of the mobile tyre retreading plant of Figure 1;
Figure 3 is a schematic plan view of a different embodiment of the mobile tyre retreading plant of Figure 1;
Figure 4 is a schematic view of an application of a filler over a pre-cured tread strip previously wound around a casing of a tyre to be retread in the mobile tyre retreading plant of Figure 3;
Figure 5 is a schematic view of a curing of a tyre retread in the mobile tyre retreading plant of Figure 3;
Figure 6 is a schematic view of a removal of a filler from the pre-cured tread strip after the curing in the mobile tyre retreading plant of Figure 3;
Figure 7 is a schematic view of an application of a filler over a flat pre-cured tread strip in the mobile tyre retreading plant of Figure 3;

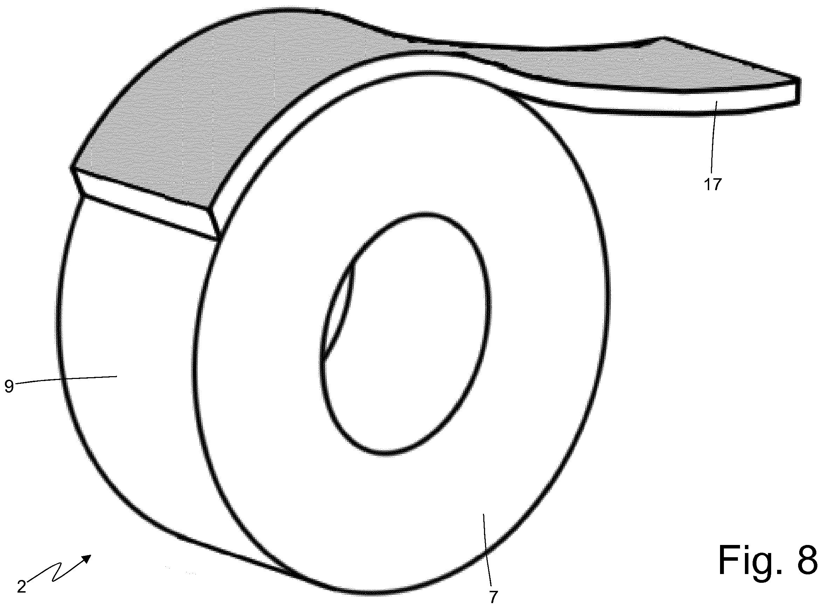

Figure 8 is a schematic view of a winding around a casing of a tyre to be retread of a pre-cured tread strip previously provided with a filler in the mobile tyre retreading plant of Figure 3;
Figure 9 is a schematic plan view of a different embodiment of the mobile tyre retreading plant of Figure 1;
Figure 10 is a perspective view of a curing unit of a curing station of the mobile tyre retreading plant of Figure 9;
Figure 11 is a front view of the curing unit of figure 10; and
Figure 12 is a front view of the curing unit of figure 10 with the positioning highlighted of a tyre to be cured.

### PREFERRED EMBODIMENTS OF THE INVENTION

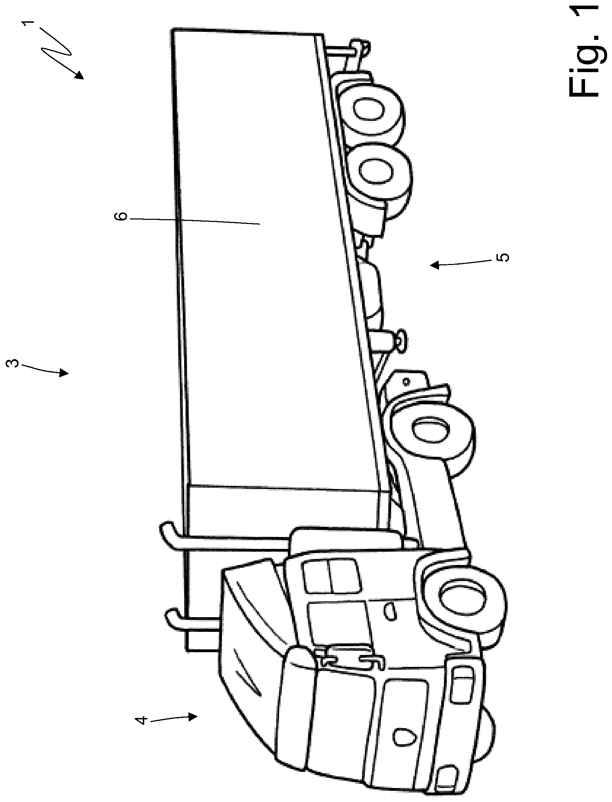

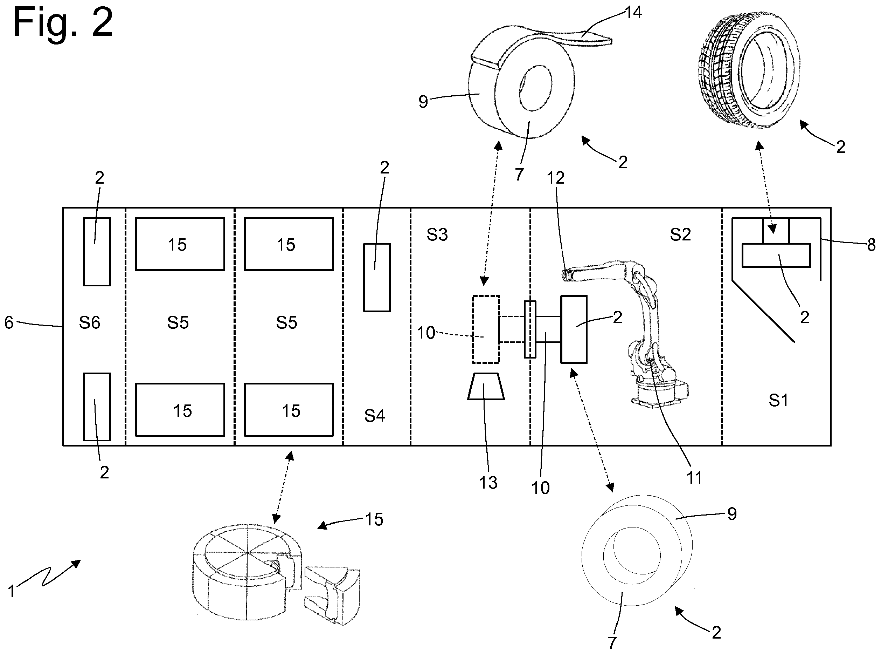

Number 1 in Figure 1 indicates as a whole a mobile retreading plant for retreading a *"truck"* tyre 2 (shown in Figure 2).

The mobile retreading plant 1 comprises a road train 3 composed of a motor vehicle 4 (i.e. a drive unit) and a trailer 5 (i.e. a towed unit) . The trailer 5 supports a wagon 6 inside which are contained the equipment (described in detail below) which perform the retreading operations of the tyre 2. According to other embodiments not shown, the shape of the trailer 3 could be different (for example an additional trailer may be provided) or the trailer train 3 could be replaced by a truck supporting the wagon 6.

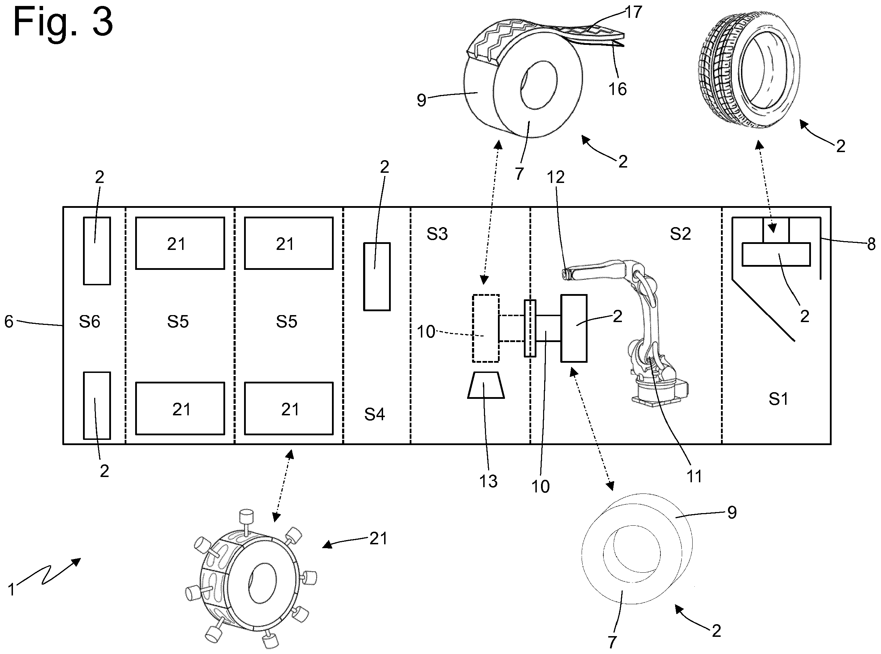

According to Figure 3, the inside of the wagon 6 is divided into a plurality of stations S1-S6.

An inspection station S1 is provided, in which the tyre 2 is inspected to check if the casing 7 of the tyre 2 is intact (and therefore the tyre 2 can be retread) or if the casing 7 of the tyre 2 is damaged (and therefore the tyre 2 cannot be retread). For example, the inspection station S1 comprises a vertical shearographic machine 8; shearography is a non-destructive testing technique acting throughout measurements of material deformations to provide information about the eventual presence of internal separations to the casing 7.

A preparation station S2 is provided, in which the old worn tread (not shown) is mechanically removed from the tyre 2, bringing into view an equatorial surface 9 of the casing 7 of the tyre 2. In particular, in the preparation station S2 a motorized support 10 on which the tyre 2 is mounted in a vertical position and which is adapted to rotate the tyre 2. Moreover, in the removal station S2 an operating device 11 is provided which is adapted to support and actuate a removal tool 12 (e.g. a cutter) of the old worn tread; preferably, the operating device 11 consists of an anthropomorphic robot which is adapted to move the removal tool 12 (typically with six degrees of freedom) into space.

In the preparation station S2 and after the old worn out tread has been removed, the equatorial surface 9 of the casing 7 is also skived to remove any local damage; the skiving operation can determine the formation on the equatorial surface 9 of the casing 7 of craters having variable and random dimensions and positions which are filled with green rubber.

A winding station S3 is provided in which the casing 7 is transferred at the end of the filling; according to a possible embodiment, the winding station S3 shares the same motorized support 10 with the preparation station S2, i.e. the only common motorized support 10 is rotatable about a vertical rotation axis to cyclically move the tyre 2 from the preparation station S2 to the winding station S3.

According to a different embodiment not shown, the winding station S3 comprises a motorized support 10 which is separate and independent of the motorized support 10 of the preparation station S2; in this case, the tyre 2 must be removed from the motorized support 10 of the preparation station S2 and then mounted on the motorized support 10 of the winding station S3. In the winding station S3, a winding device 13 winds around the casing 7 a green and smooth rubber tread strip 14 (i.e. completely devoid of the tread pattern).

A repair station S4 is provided in which the tyre 2 provided with the new green and smooth rubber tread strip 14 is visually inspected and, if necessary, is subjected to minor adjustments (manually performed by an operator) of any evident defect.

A curing station S5 is provided, which is provided with four curing molds 15 (coupled to respective curing presses) in which the tyre 2 provided with the new green and smooth rubber tread strip 14 is subjected to a curing cycle (obviously the number of curing molds 15 present in the curing station S5 could be different); internally each curing mold 15 has in negative the tread pattern in such a way as to imprint the tread pattern on the green rubber tread strip 14 (initially smooth).

Finally, a storage station S6 is provided in which the retread tyres 2 extracted from the curing molds 15 are allowed to cool before leaving the mobile retreading plant 1.

In use, the mobile retreading plant 1 is transported to the home of a customer who has a fleet of vehicles (trucks, trucks, buses ...) for which he has to replace the worn tyres 2: directly next to each vehicle the worn tyres 2 are dismounted and are selected which worn tyres 2 has to (can) be retread and which worn tyres 2 must has not to (cannot) be retread, and then at least part of the worn tyres 2 are immediately retread; at the end of the retreading, the retreaded tyres 2 are mounted immediately in the vehicle from which the corresponding worn tyres 2 originated or even in other vehicles of the same fleet.

The mobile retreading plant 1 illustrated in Figure 2 performs the so-called hot retreading in which the tread strip 14 is green and free of the tread pattern which is produced during curing.

In the alternative embodiment shown in Figure 3, the mobile retreading plant 1 performs the so-called cold retreading.

In the winding station S3 shown in Figure 3, the winding device 13 winds an intermediate strip or cushion 16 of green rubber and a pre-cured tread strip 17 about the casing 7 (one after the other). It is important to observe that the pre-cured tread strip 17 has already been cured in a special mold before being wound about the casing 7 and presents the tread pattern.

To complete the retreading in the mobile retreading plant 1 shown in Figure 3, each retread tyre 2 (i.e. each casing 7 provided with the cushion 16 and the pre-cured tread strip 17) is subjected to a curing process for curing the cushion 16 which is interposed between the casing 7 and the pre-cured tread strip 17 thus resulting in optimal adhesion of the pre-cured tread strip 17 to the casing 7 by means of the bonding action of the cushion 16.

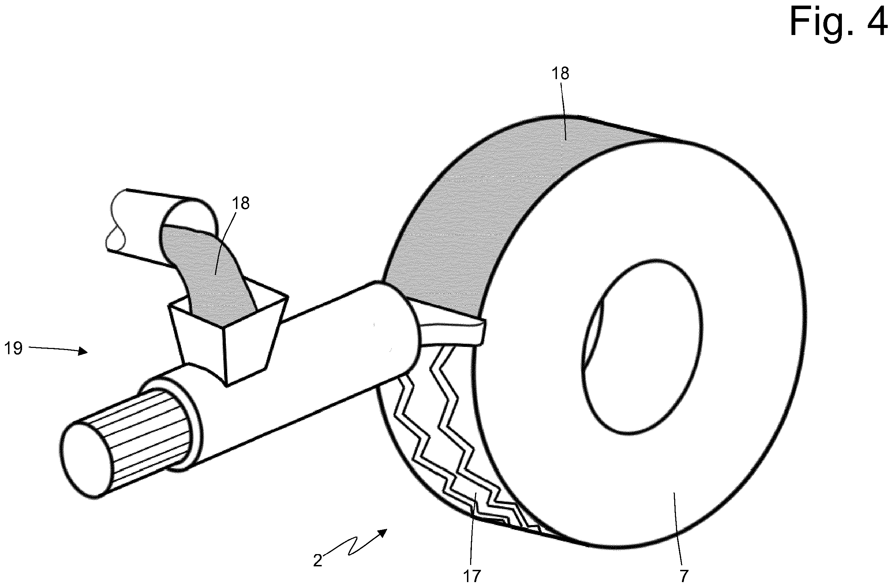

According to what shown in Figure 4, after winding the pre-cured tread strip 17 around the casing 7 and before subjecting the casing 7 to curing, onto the pre-cured tread strip 17 is applied a filler 18 in the fluid which completely fills the tread pattern (that is, it penetrates the grooves of the tread pattern) and forms a coating that covers the pre-cured tread strip 17. In other words, the filler 18 constitutes a *"negative"* of the pre-cured tread strip 17 covering the pre-cured tread strip 17 by penetrating into the grooves of the tread pattern.

The filler 18 is applied on the pre-cured tread strip 17 so as to completely cover the pre-cured tread strip 17 and then present externally a flat equatorial surface (i.e. smooth, free of depressions and grooves); in other words, the filler 18 is used to form a coating that *"smoothes"* the pre-cured tread strip 17 by providing outwardly a flat, equatorial surface (i.e. smooth, without depressions and grooves).

In the embodiment illustrated in Figure 3, the filler 18 is applied onto the pre-cured tread strip 17 by an applicator device 19 after the pre-cured tread strip 17 has been wrapped around the casing 7 (i.e. when the strip 17 of the pre-cured tread has an annular shape).

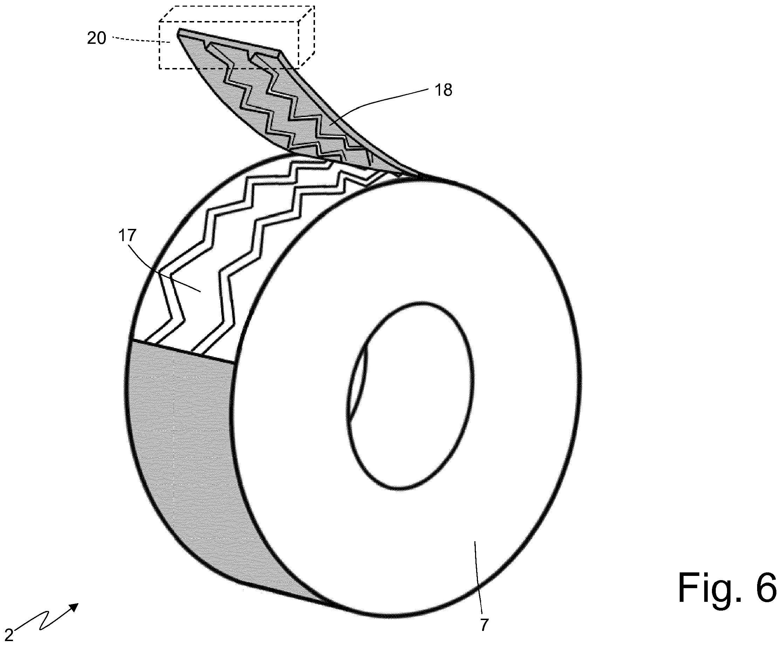

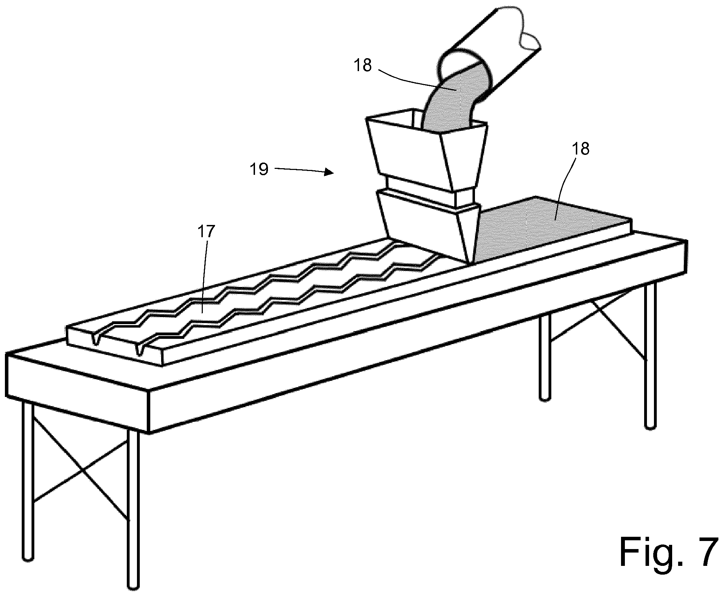

In the variant shown in Figure 6, the filler 18 is applied to the pre-cured tread strip 17 by an applicator device 19 before the pre-cured tread strip 17 is wrapped around the casing 7 (i.e. when the pre-cured tread strip 17 pre-cured has a flat shape). In this embodiment and as illustrated in Figure 7, the pre-cured tread strip 17 provided with the filler 18 (i.e. coated by the filler 18) is wound around the casing 7.

By way of example, the applicator device 19 comprises an outlet mouth which has the same width as the pre-cured tread strip 17 and is provided with an outlet opening which dispenses the filler 18 in a fluid state uniformly throughout the transversal extension of the pre-cured tread strip 17.

As illustrated in Figure 6, after curing the filler 18 is removed from the pre-cured tread strip 17 by a removal device 20 and this operation terminates the tyre retreading process 2.

As previously stated, the filler 18 is (at least initially, i.e. at the moment of application on the pre-cured tread strip 17) in a fluid state, i.e. it is sliding since it has limited consistency; in other words, the filler 18 is (at least initially) in a fluid state, i.e. it is deformed indefinitely if subjected to a cutting stress independently of the extent of the cutting stress.

According to a possible embodiment, the filler 18 contains metal powder (very thin) which has the advantage of having an excellent thermal transmissibility which is useful during curing to make the curing faster (as better explained below).

According to a possible embodiment, the filler 18 could also contain elastomeric powder obtained at least partially grinding the old worn tread (in other words *"recycling"* the old tread worn to form the filler 18).

According to a preferred embodiment, the filler 18 can be made by clay or other similar natural material which has the advantage of being easy retrievable, inexpensive and recyclable either for further retreading operation or in general. Furthermore, the natural shrinkage of the clay due to curing allows also easy removal of the filler 18 from the tread pattern; in other words, after curing the filler 18 made by clay (or other similar natural material) can be removed easily from the pre-cured tread strip 17 thanks to the natural shrinkage of the clay due to curing. In general, the filler 18 can be made (partially or completely) by a material (such as clay) which shrikes during the curing (i.e. has a natural shrinkage due to curing).

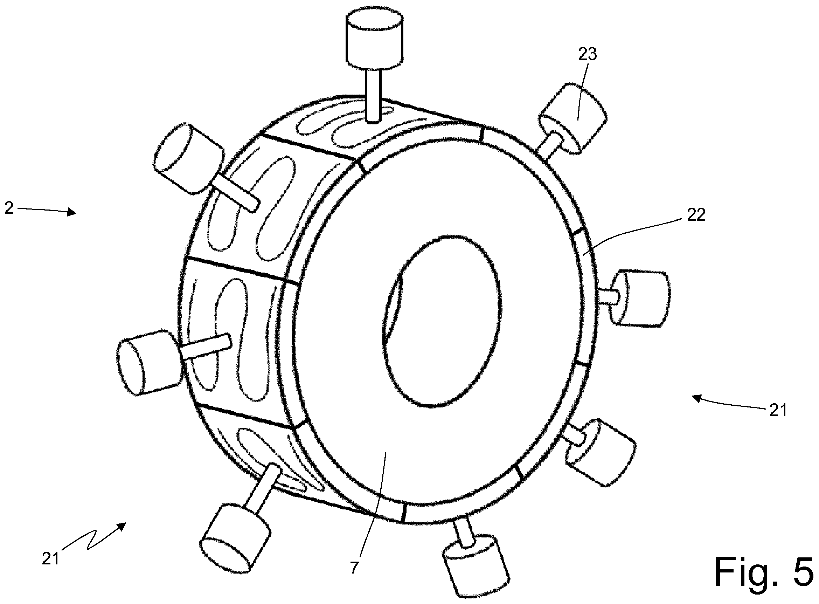

According to a possible embodiment, the filler 18 comprises binders (for example polyvinyl glues) which dry after application of the filler 18; in this way, the filler 18 forms a compact strip which, after curing, can be unwound from the tyre 2 (as illustrated for example in Figure 5). In this embodiment, the filler 18 in a fluid state is a rather dense sludge which, when dried, forms a more or less compact body.

According to an alternative embodiment, the fluid filler 18 is free of binders which dry after application of the fluid filler 18 and therefore the filler 18 is rendered at least partially stable after application of the filler 18 by mechanical compacting; in this way, the filler 18 does not form a compact strip and after curing is generally removed being previously destroyed (for example by high frequency vibrations and/or by high pressure water jets). In this embodiment, the filler 18 in a fluid state is in essence a very thin powder which when pressed tends to compact.

According to what shown in Figure 3, curing station S5 comprised four curing molds 21; according to what shown in Figure 5, each curing mold 21 is composed of a plurality of pressure bodies 22 which each are shaped as a circular sector and together constitute a ring adapted to contain the tyre 2. Each pressure body 22 is moved radially (and thus pushed radially against the tyre 2) by an actuator 23 (for example a pneumatic or hydraulic cylinder). According to a preferred embodiment, the actuators 23 are adapted to apply a radial pressure towards the center (i.e. a radial pressure which compresses the tyre 2) of calibrated force and determined in such a way that during the curing process the tyre 2 (i.e. the pre-cured tread strip 17 which is part of the tyre 2) is compressed radially at a desired pressure; by way of example, the actuators 23 could use to radially press the pressure bodies 22 a calibrated pressure pneumatic or hydraulic plant, or they could use a fully mechanical plant provided with calibrated springs.

Each pressure body 22 is heated to transmit heat to the pre-cured tread strip 17 and then to the cushion 16; the pressure bodies 22 are not in direct contact with the pre-cured tread strip 17 since the pre-cured tread strip 17 is coated by the filler 18 and, consequently, the heat held by the pressure bodies 22 to reach the pre-cured tread strip 17 must first pass through the filler 18 (as a result and as previously stated the filler 18 must be a good heat transmitter).

During curing, the tyre 2 is maintained at ambient pressure and a radial pressure is applied mechanically to the pre-cured tread strip 17 by the pressor bodies 22 of the curing mold 14 and by the interposition of the filler 18. In other words, the pressures bodies 22 of the curing mold 14 press on the filler 18 which has a smooth surface externally (hence the pressure exerted by the pressure bodies 22 is distributed uniformly over the whole filler 18); the filler 18 transmits the pressure exerted by the pressure bodies 22 uniformly over the whole pre-cured tread strip 17 since the filler 18 is homogeneously distributed over the whole pre-cured tread strip 17 (i.e. also in all the grooves of the tread pattern). Accordingly, the filler 18 acts as a *"distributor"* of the pressure exerted by the pressure bodies 22 over the entire pre-cured tread strip 17 by being a coating that negatively reproduces the shape of the pre-cured tread strip 17.

In essence, the filler 18 which covers the pre-cured tread strip 17 constitutes a *"counter-mold"* (a mechanical interface) which cooperates with the curing mold 14 to distribute uniformly over the whole pre-cured tread strip 17 the pressure (thrust) applied by the pressor bodies 22 of the curing mold 14.

As previously stated, during the curing process the tyre 2 is kept at ambient pressure and a radial pressure is applied mechanically to the pre-cured tread strip 17 (which is part of the tyre 2 and constitutes the outermost part of the tyre 2 same). In particular, during curing, a radial pressure is applied mechanically to the pre-cured tread strip 17 by a series of pressure bodies 22, which are arranged around the tyre 2 and are pushed with a radial force determined against the pre-cured tread strip 17.

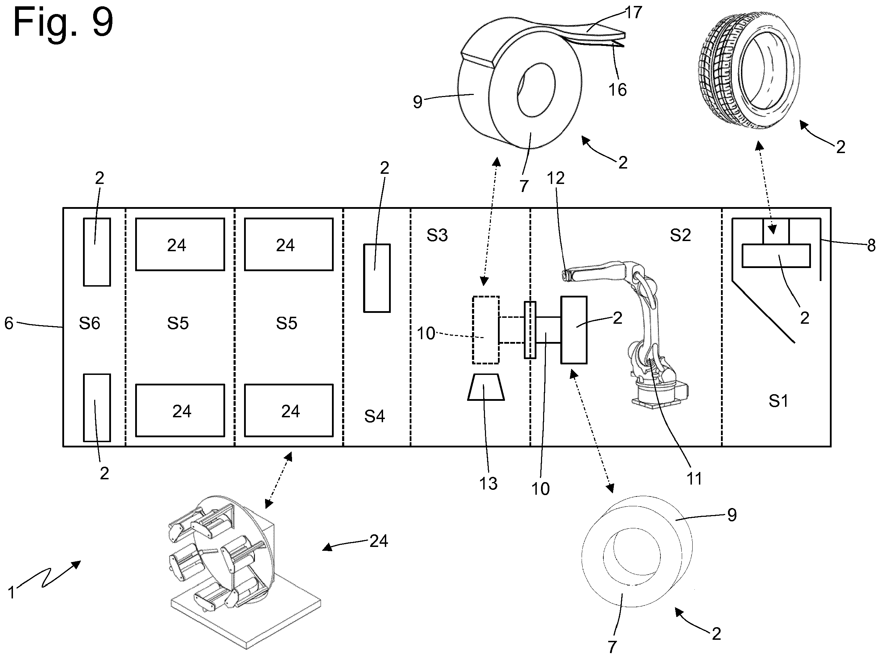

In the alternative embodiment shown in Figure 9, the mobile retreading plant 1 performs the so-called cold retreading by means of a pre-cured tread strip 17 which has already been cured in a special mold before being wound about the casing 7 but that it is also without a pattern, i.e., externally it is completely smooth (unlike the pre-cured tread strip 17 used in the mobile retreading plant 1 shown in Figure 3, which instead presents the pattern from the beginning).

In the winding station S3 shown in Figure 9, an intermediate strip or cushion 16 of green rubber and a pre-cured tread strip 17 without a pattern are wound about the casing 7 (one after the other). It is important to observe that the pre-cured tread strip 17 has already been cured in a special mold before being wound about the casing 5 but that it is also without a pattern, i.e., externally it is completely smooth.

In the mobile retreading plant 1 shown in Figure 9, each retreaded tyre 2 (i.e. each casing 7 provided with the cushion 16 and with the pre-cured tread strip 17) is subjected to a curing process for curing the cushion 16 which is interposed between the casing 7 and the pre-cured tread strip 17 thus resulting in optimal adhesion of the pre-cured tread strip 17 to the casing 7 by means of the bonding action of the cushion 16. It is important to note that during the curing process only the curing of the cushion 16 is performed, without printing any kind of pattern on the pre-cured tread strip 17, which remains smooth.

Finally, mobile retreading plant 1 shown in Figure 9 the operating device 11 is used, at the end of the curing, for engraving, upon the pre-cured tread strip 17 (now fully integrated with the casing 7) of each retread tyre 2, the desired pattern by means of the action of at least one tool 12 which is moved by the operating device 11 (more than one tool could also be used, acting in succession or at the same time). Typically the tool is a grinding wheel or milling cutter and implements the pattern on the pre-cured tread strip 17 by means of mechanical removal.

According to a different embodiment not shown, two operating devices 11 (more or less identical each to the other) could be provided, one of which is dedicated to removing the worn tread by the tyres 2 to be retread and the other of which is dedicated to engraving the tread pattern in the retread tyres 2.

As shown in Figure 9, the mobile retreading plant 1 comprises four twin curing molds 24 operating in parallel, insofar as the curing operation of the green rubber cushion 16 is slower than the other operations.

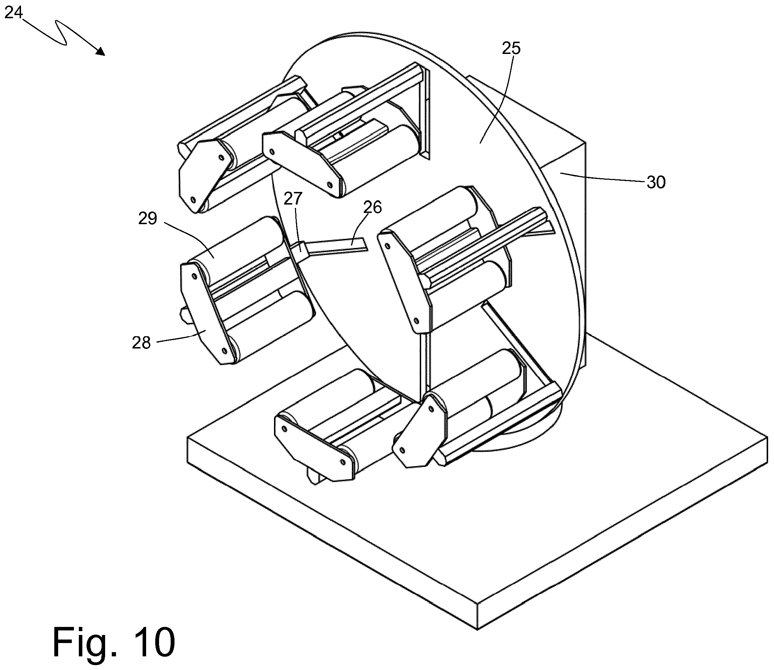

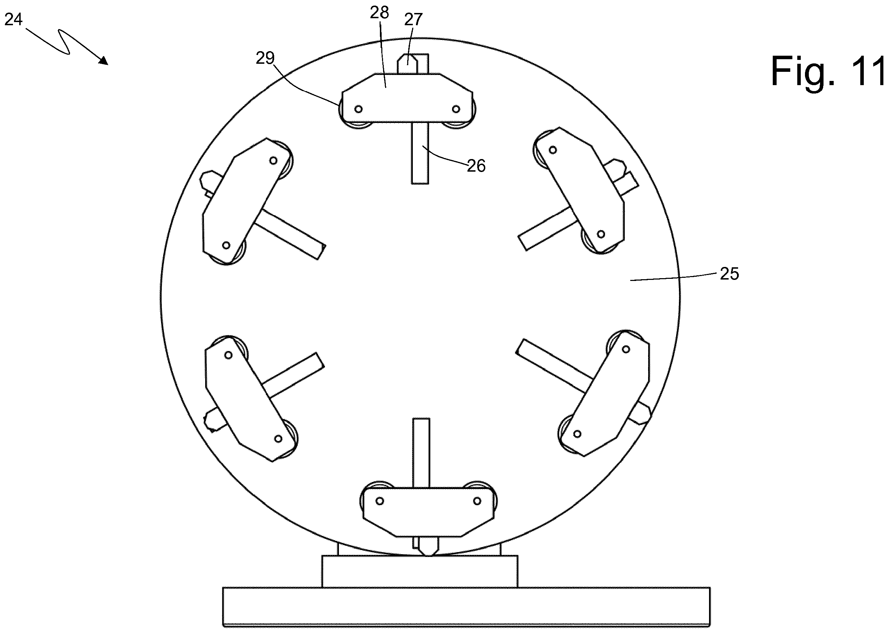

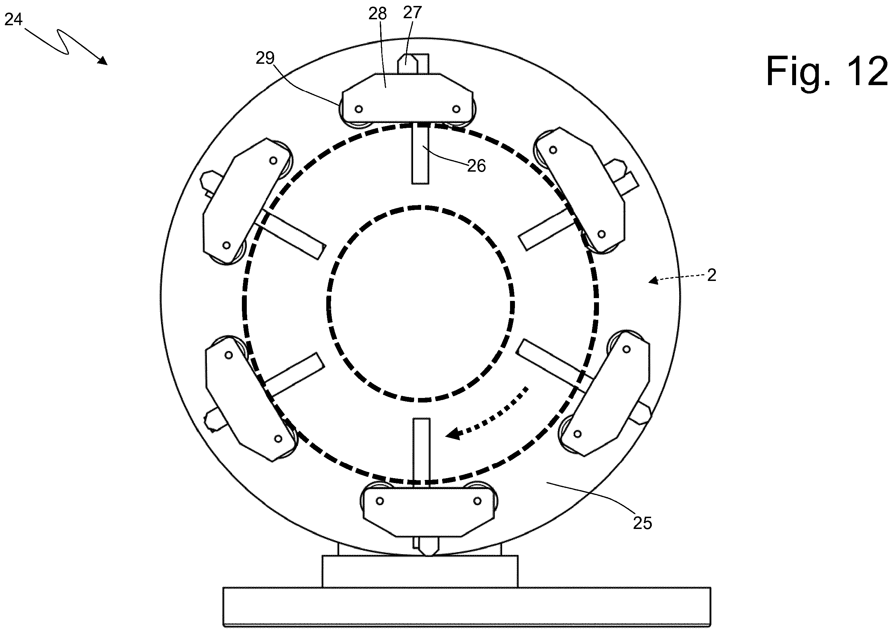

As shown in figures 10, 11 and 12, each curing mold 24 comprises a circular support body 25 provided with a plurality of radially directed linear guides 26; within each linear guide 26 there is a corresponding slide 27 which is mounted movable along the linear guide 26 and which supports a frame 28 upon which are mounted (generally loosely) two pressure rollers 29 arranged perpendicularly to the support body 25 (obviously a frame 28 could only house one pressure roller 29 or three pressure rollers 29). In use (as is well shown in figure 12), the pressure rollers 29 are oriented parallel to the tyre 2, they are arranged all around the tyre 2, and radially press against several parts of the same tyre 2. Each curing mold 24 further comprises an actuator 30 that is suited to move the slides 27 along the respective linear guides 26 between an open position (utilized to supply a tyre 2 to be cured or to withdraw a cured tyre 2), wherein the pressure rollers 29 are relatively far from the tyre 2, and a closed position (shown in figure 12 and utilized during the curing process of a tyre 2) wherein the pressure rollers 29 press against the tyre 2 (i.e., against the pre-cured tread strip 17 that is part of the tyre 2). According to a preferred embodiment, the actuator 30 is suited to apply a radial pressure (thrust) to the pressure rollers 29 towards the center (i.e., a radial thrust that compresses the tyre 2), of a calibrated and determined force, such that during the curing process the tyre 2 (i.e., the pre-cured tread strip 17 that is part of the tyre 2) is radially compressed at a desired pressure. By way of example, in order to radially push the pressure rollers 29, the actuator 30 could utilize a calibrated pneumatic or hydraulic pressure system, or else it could utilize a fully mechanical system equipped with calibrated springs.

According to a different embodiment which is not shown, within each curing mold 24 the pressure rollers 29 are replaced with clamps or other mechanical devices that, as they close, grip the tyre 2.

During the curing process, the tyre 2 is maintained at ambient pressure and a radial pressure is mechanically applied to the pre-cured tread strip 17 (which is part of the tyre 2 and that constitutes the most external part of the same tyre 2). In particular, during curing, radial pressure is mechanically applied to the pre-cured tread strip 17 (which is part of the tyre 2 and that constitutes the most external part of the same tyre 2) by means of a series of pressure rollers 29 that are arranged around the tyre 2 and that are pushed, with a determined radial force, against the pre-cured tread strip 17.

According to a preferred embodiment, at least one pressure roller 29 is motorized in order to rotate upon itself, and therefore to determine the (slow) rotation of the tyre 2 during curing; as a guide, the tyre is rotated at a speed on the order of 1-5 mm/sec (or approximately 10- 60 minutes are required for one complete revolution of the tyre 2) .

The embodiments described herein can be combined without departing from the scope of protection of the present invention.

The mobile retreading plant 1 described above has numerous advantages.

First of all, the mobile retreading plant 1 described above makes it possible to substantially reduce the cost of retreading of a worn tyre 2, since being able to operate directly where a fleet of vehicles is located cancels all the costs of handling the tyres 2 (i.e. the transport of tyres 2 from the vehicle fleet parking lot to the retreading system and the subsequent transport of the retread tyres 2 from the retreading plant to the vehicle fleet parking lot).

For example, all retreading operations of tyres 2 can be carried out on a weekend vehicle standstill by completely eliminating the cost of stopping vehicles.

Moreover, the operating modes of the mobile retreading plant 1 described above are partially different from the operating modes of a fixed traditional retreading system to minimize the size and consumption of energy; in this way, the mobile retreading plant 1 described above can perform an efficient and effective "retreading *on demand".* In particular, all the operating modes of the mobile retreading plant 1 described above do avoids the use, during the curing process, of an autoclave (avoiding the safety problems and encumbrance that the use of the autoclave entails) and of envelopes for the vacuum (avoiding the complicated dressing / removing the tyre 2 and the risks of breaking the vacuum envelopes);

Finally, the mobile retreading plant 1 described above is able to offer a very high productivity: it is estimated that the above-described retreading mobile plant 1 can reach a productivity of 2.5-3 tyres/person/ hour while a fixed traditional retreading plant normally stands at 0.8-1.4 tyres/person/hour.

### LIST OF REFERENCE NUMBERS OF FIGURES

- 1: mobile retreading plant
- 2: tyre
- 3: road train
- 4: motor vehicle
- 5: trailer
- 6: wagon
- 7: casing
- 8: vertical shearographic machine
- 9: equatorial surface
- 10: motorized support
- 11: operating device
- 12: removal tool
- 13: winding device
- 14: pre-cured tread strip
- 15: curing mold
- 16: cushion
- 17: pre-cured tread strip
- 18: filler
- 19: applicator device
- 20: removal device
- 21: curing mold
- 22: pressure bodies
- 23: actuator
- 24: curing mold
- 25: circular support body
- 26: linear guide
- 27: slide
- 28: frame
- 29: pressure roller
- 30: actuator
- S1: inspection station
- S2: preparation station
- S3: winding station
- S4: repair station
- S5: curing station
- S6: storage station

## Claims

1. A mobile tyre retreading plant (1); the mobile tyre retreading plant (1) comprises:
a preparation station (S2), in which an old worn tread is mechanically removed from a tyre (2) in order to expose an equatorial surface (9) of a casing (7) of the tyre (2);
a winding station (S3), in which a tread strip (13; 17) is wound about the equatorial surface (9) of the casing (7); and
a curing station (S5), which is provided with at least one curing mold (15; 21; 24) in which the tyre (2) provided with the tread strip (13; 17) is cured;
the mobile tyre retreading plant (1) is **characterized in** comprising:
a wagon (6), inside which are contained the preparation station (S2), the winding station (S3), and the curing station (S5); and
a vehicle (4) which supports the wagon (6) for transporting the wagon (6) on the road.

2. The mobile tyre retreading plant (1)according to claim 1 and comprising an inspection station (S1) which is contained in the body (6) and in which the tyre (2) is inspected to check if it is the casing (7) of the tyre (2) is intact.

3. The mobile tyre retreading plant (1) according to claim 2, wherein the inspection station (S1) comprises a vertical shearographic machine (8).

4. The mobile tyre retreading plant (1) according to claim 1, 2 or 3, wherein:
a motorized support (10) is provided on which the tyre (2) is mounted in a vertical position and which is designed to rotate the tyre (2); and
the motorized support (10) is shared between the preparation station (S2) and the winding station (S3) and is rotatable about a vertical rotation axis to move the tyre (2) from the preparation station (S2) to the winding station (S3).

5. The mobile tyre retreading plant (1) according to any one of claims 1 to 4, wherein the removal station (S2) comprises:
removal tool (12); and
an operating device which is adapted to support and actuate the removal tool (12) and consists of an anthropomorphic robot.

6. The mobile tyre retreading plant (1) according to any one of claims 1 to 5, wherein, in the preparation station (S2) and after the removal of the old worn tread (7), they are performed: the skiving of the equatorial surface (9) of the casing (7) to remove any local damage, and any filling with green rubber of craters on the equatorial surface (9) of the casing (7).

7. The mobile tyre retreading plant (1) according to any one of claims 1 to 6, wherein the curing station (S5) comprises four curing molds (15; 21; 24).

## Patentansprüche

1. Mobile Reifenrunderneuerungsanlage (1); wobei die mobile Reifenrunderneuerungsanlage (1) umfasst:
eine Vorbereitungsstation (S2), in der eine alte abgenutzte Lauffläche mechanisch von einem Reifen (2) entfernt wird, um eine Äquatorialoberfläche (9) einer Karkasse (7) des Reifens (2) freizulegen;
eine Wickelstation (S3), in der ein Laufflächenstreifen (13; 17) um die Äquatorialoberfläche (9) der Karkasse (7) gewickelt wird; und
eine Vulkanisierungsstation (S5), die mit mindestens einer Vulkanisierungsform (15; 21; 24) versehen ist, in welcher der mit dem Laufflächenstreifen (13; 17) versehene Reifen (2) vulkanisiert wird;
wobei die mobile Reifenrunderneuerungsanlage (1) **dadurch gekennzeichnet ist, dass** sie Folgendes umfasst:
einen Wagen (6), in dem die Vorbereitungsstation (S2), die Wickelstation (S3) und die Vulkanisierungsstation (S5) enthalten sind; und
ein Fahrzeug (4), das den Wagen (6) zum Transportieren des Wagens (6) auf der Straße trägt.

2. Mobile Reifenrunderneuerungsanlage (1) nach Anspruch 1 und umfassend eine Inspektionsstation (S1), die in der Karosserie (6) enthalten ist und in welcher der Reifen (2) inspiziert wird, um zu überprüfen, ob die Karkasse (7) des Reifens (2) intakt ist.

3. Mobile Reifenrunderneuerungsanlage (1) nach Anspruch 2, wobei die Inspektionsstation (S1) eine vertikale Shearographiemaschine (8) umfasst.

4. Mobile Reifenrunderneuerungsanlage (1) nach Anspruch 1, 2 oder 3, wobei:
eine motorisierte Halterung (10) vorgesehen ist, auf welcher der Reifen (2) in einer vertikalen Position montiert ist und die dazu ausgelegt ist, den Reifen (2) zu drehen; und
die motorisierte Halterung (10) zwischen der Vorbereitungsstation (S2) und der Wickelstation (S3) geteilt ist und um eine vertikale Drehachse drehbar ist, um den Reifen (2) von der Vorbereitungsstation (S2) zu der Wickelstation (S3) zu bewegen.

5. Mobile Reifenrunderneuerungsanlage (1) nach einem der Ansprüche 1 bis 4, wobei die Entfernungsstation (S2) umfasst:
Entfernungswerkzeug (12); und
eine Bedienungsvorrichtung, die zur Unterstützung und Betätigung des Entfernungswerkzeugs (12) angepasst ist und aus einem anthropomorphen Roboter besteht.

6. Mobile Reifenrunderneuerungsanlage (1) nach einem der Ansprüche 1 bis 5, wobei in der Vorbereitungsstation (S2) und nach dem Entfernen der alten abgenutzten Lauffläche (7) Folgendes durchgeführt wird: das Abschälen der Äquatorialoberfläche (9) der Karkasse (7), um jegliche lokale Beschädigung zu entfernen, und ein Füllen von Kratern auf der Äquatorialoberfläche (9) der Karkasse (7) mit unvulkanisiertem Kautschuk.

7. Mobile Reifenrunderneuerungsanlage (1) nach einem der Ansprüche 1 bis 6, wobei die Vulkanisierungsstation (S5) vier Vulkanisierungsformen (15; 21; 24) umfasst.

## Revendications

1. Installation mobile de rechapage de pneumatique (1) ; l'installation mobile de rechapage de pneumatique (1) comprend :
un poste de préparation (S2), dans lequel une ancienne bande de roulement usée est mécaniquement retirée d'un pneumatique (2) afin d'exposer une surface équatoriale (9) d'une carcasse (7) du pneumatique (2) ;
un poste d'enroulement (S3), dans lequel une bande de rechapage (13 ; 17) est enroulée autour de la surface équatoriale (9) de la carcasse (7) ; et
un poste de durcissement (S5), qui est pourvue d'au moins un moule de durcissement (15 ; 21 ; 24) dans lequel le pneumatique (2) muni de la bande de rechapage (13 ; 17) est durci ;
l'installation mobile de rechapage de pneumatique (1) est **caractérisée en ce qu'elle** comprend :
un wagon (6), à l'intérieur duquel sont contenus le poste de préparation (S2), le poste d'enroulement (S3) et le poste de durcissement (S5) ; et
un véhicule (4) qui supporte le wagon (6) pour le transport du wagon (6) sur la route.

2. Installation mobile de rechapage de pneumatique (1) selon la revendication 1 et comprenant un poste d'inspection (S1) qui est contenu dans le corps (6) et dans lequel le pneumatique (2) est inspecté pour vérifier si la carcasse (7) du pneumatique (2) est intacte.

3. Installation mobile de rechapage de pneumatique (1) selon la revendication 2, dans laquelle le poste d'inspection (S1) comprend une machine de shearographie verticale (8).

4. Installation mobile de rechapage de pneumatique (1) selon la revendication 1, 2 ou 3, dans laquelle :
un support motorisé (10) est fourni sur lequel le pneumatique (2) est monté dans une position verticale et qui est conçu pour faire tourner le pneumatique (2) ; et
le support motorisé (10) est partagé entre le poste de préparation (S2) et le poste d'enroulement (S3) et peut tourner autour d'un axe de rotation vertical pour déplacer le pneumatique (2) du poste de préparation (S2) vers le poste d'enroulement (S3).

5. Installation mobile de rechapage de pneumatique (1) selon l'une quelconque des revendications 1 à 4, dans laquelle le poste de retrait (S2) comprend :
un outil de retrait (12) ; et
un dispositif de commande qui est adapté pour supporter et actionner l'outil de retrait (12) et est constitué d'un robot anthropomorphe.

6. Installation mobile de rechapage de pneumatique (1) selon l'une quelconque des revendications 1 à 5, dans laquelle, dans le poste de préparation (S2) et après le retrait de la bande de roulement usagée (7), ils sont réalisés : le décollement de la surface équatoriale (9) de la carcasse (7) pour retirer tout dommage local, et tout remplissage avec du caoutchouc cru de cavités sur la surface équatoriale (9) de la carcasse (7).

7. Installation mobile de rechapage de pneumatique (1) selon l'une quelconque des revendications 1 à 6, dans laquelle le poste de durcissement (S5) comprend quatre moules de durcissement (15 ; 21 ; 24).
